# EUROPÄISCHE PATENTSCHRIFT

(11) **EP 2 674 747 B1**
(45) Veröffentlichungstag und Bekanntmachung des Hinweises auf die Patenterteilung: **20.02.2019**
(21) Anmeldenummer: 13171496.6
(22) Anmeldetag: 11.06.2013
(51) Int. Cl.: G01N 21/86, B41F 33/00

(54) **VERFAHREN UND VORRICHTUNG FÜR DIE FARBMESSUNG AN EINEM DRUCKBILD AUF EINER LAUFENDEN MATERIALBAHN**
METHOD AND APPARATUS FOR COLOUR MEASUREMENT ON A PRINTED IMAGE OF A CONTINUOUS MATERIAL WEB
PROCÉDÉ ET DISPOSITIF POUR LA MESURE DE COULEUR SUR UNE IMAGE IMPRIMÉE SUR UNE BANDE DE MATÉRIAU CONTINUE

(30) Priorität: 13.06.2012 DE 102012209896
(43) Veröffentlichungstag der Anmeldung: 18.12.2013
(73) Patentinhaber: BST eltromat International GmbH, 33739 Bielefeld (DE)
(72) Erfinder: WIEBE, Michael, 33818 Leopoldshöhe (DE); DATTNER, Michael Dr., 33739 Bielefeld (DE)
(74) Vertreter: Ter Meer Steinmeister & Partner

(56) Entgegenhaltungen:
- EP-A2- 0 181 228
- CH-A- 363 175
- DE-A1- 4 112 404

## Beschreibung

Die Erfindung betrifft ein Verfahren sowie eine Vorrichtung zum Messen des Farbwertes eines Messbereichs bzw. eines Farbfeldes in einem Druckbild auf einer laufenden Materialbahn, wobei unter der Materialbahn, die häufig transparent oder teilweise transparent ist, ein Messhintergrund vorgesehen wird und die Messung des Farbwertes an einem auf dem Messhintergrund aufliegenden Druckbild vorgenommen wird. Aus EP 2 660 058 A2 ist bekannt, als Messhintergrund ein plattenförmiges Bauteil vorzusehen, das mit einer über der Materialbahn verfahrbaren Messeinheit unter der Materialbahn mitbewegt wird, wobei sich dieser plattenförmige Messhintergrund in der Außerbetriebsstellung in einem Abstand unter der Materialbahn befindet, die mit einer Geschwindigkeit von z.B. 800 m/min bewegt wird Der Messhintergrund wird beim Messen kurzzeitig an der Materialbahn zum Anliegen gebracht.
Im Augenblick der Farbmessung wird durch Druckluft oder durch Anlegen von Unterdruck an der Materialbahn kurzzeitig die Materialbahn am Messhintergrund zum Aneinanderliegen gebracht, worauf nach Vornahme der Messung der Kontakt zwischen Messhintergrund und Materialbahn wieder aufgehoben wird. Trotz der kurzzeitigen Anlage des Messhintergrunds an der Materialbahn tritt während der Anlage Reibung zwischen stationärem Messhintergrund und bewegter Materialbahn auf, wodurch u a auch die Verschmutzung des Messhintergrunds verstärkt wird Der Verschmutzungsgrad des Messhintergrunds beeinflusst wiederum die Farbmessung, weil bei der Farbmessung der durch die Materialbahn hindurchscheinende Messhintergrund die Farbmessung verfälscht. EP 2 660 058 A2 ist jedoch eine europäischen Patentanmeldung gemäß Art. 54 (3) EPÜ und daher für die Frage der erfinderischen Tätigkeit nicht von Bedeutung. Aus DE 41 12 404 A1 ist eine Farbmessvorrichtung bekannt, bei der die Materialbahn über eine Rolle läuft, deren Umfangsfläche den Messhintergrund bildet.
Der Erfindung liegt die Aufgabe zugrunde, eine Verbesserung dieser bekannten Ausgestaltung eines Messhintergrunds vorzusehen, Erfindungsgemäß wird diese Aufgabe mit einer Vorrichtung nach Anspruch 1 bzw. einem Verfahren nach Anspruch 14 gelöst. Erfindungsgemäß wird der Messhintergrund auf einer Rolle oder Walze ausgebildet, die drehbar unter der Materialbahn angeordnet ist und im Augenblick des Messens mit der Materialbahn in Kontakt gebracht wird.
Hierbei dreht sich die Rolle mit der anliegenden, laufenden Materialbahn, sodass die Reibung zwischen Messhintergrund und Materialbahn verringert wird Hinzu kommt, dass durch diese verringerte Reibung zwischen Materialbahn und Messhintergrund dieser weniger leicht verschmutzt und dadurch die Farbmessung weniger beeinflusst wird.

Nach der Erfindung wird eine Vorrichtung für die Farbmessung an einem auf einer laufenden Materialbahn aufgedruckten Druckbild vorgesehen, die eine über der Materialbahn angeordnete, vorzugsweise verfahrbare Farbmesseinheit und einen der Farbmesseinheit gegenüberliegenden, unter der Materialbahn angeordneten Messhintergrund umfasst, wobei zur Farbmessung kurzzeitig die Materialbahn mit dem Messhintergrund in Kontakt gebracht wird und der Messhintergrund auf dem Umfang einer verdrehbaren Rolle oder einer verdrehbaren Walze ausgebildet ist.

Hierbei kann die verdrehbare Rolle zur Anlage an der Materialbahn anhebbar und zum Abheben von der Materialbahn absenkbar angeordnet sein, es ist aber auch möglich, die Materialbahn durch Anlegen von Luftdruck oder Unterdruck auf dem Umfang der Rolle zum Anliegen zu bringen, ohne dass die Rolle relativ zur Materialbahn angehoben oder abgesenkt wird.

Auf dem Umfang der Rolle oder einer entsprechenden Walze können mehrere Arten von Messhintergrund, bspw. ein heller und ein dunkler Messhintergrund, nebeneinander angeordnet werden. Vorzugsweise weiden wenigstens zwei beabstandete Rollen verdrehbar angeordnet, wobei auf dem Umfang der einen Rolle ein anderer Messhintergrund ausgebildet ist als auf dem Umfang der anderen Rolle.

Von Vorteil ist es, wenn eine Reinigungseinrichtung für den Messhintergrund auf dem Umfang einer oder mehrerer Rollen vorgesehen wird, der vorzugsweise in der Außerbetriebsstellung den Messhintergrund auf dem Umfang der Rollen reinigt Bspw kann die Reinigungseinrichtung als umlaufendes Band ausgebildet werden, das beim Reinigen die Rollen in Drehung versetzt.

Die Rolle oder Rollen können auf einer Achse frei drehbar angeordnet werden, es ist aber auch möglich, die Rolle auf einer Welle anzuordnen, die durch eine Antriebseinrichtung entsprechend der Laufgeschwindigkeit der Materialbahn in Drehung versetzbar ist.

Zweckmäßigerweise wird die Rolle bzw der Messhintergrund auf der Achse oder Welle austauschbar angeordnet, so dass entsprechend den jeweiligen Erfordernissen ein geeigneter Messhintergrund für die Messung vorgesehen werden kann

Für die Anlage der Materialbahn auf dem Messhintergrund ist es von Vorteil, wenn der Umfang der Rolle ballig ausgebildet ist. Insbesondere ist es von Vorteil, wenn ein mittiger, ebener Abschnitt auf dem Umfang der Rolle für einen dem Messbereich angepassten Anlagebereich vorgesehen ist.

Wenn die Rolle mit dem Messhintergrund auf dem Umfang relativ zur Materialbahn angehoben und abgesenkt wird, wird vorzugsweise ein Anschlag vorgesehen, der in der Anlage- bzw Messposition einen vorgegebenen Abstand des Messhintergrunds von der Messeinheit vorgibt
Der Anschlag wird zweckmäßigerweise einstellbar ausgebildet, so dass der Anschlag in Abhängigkeit von der Dicke der Materialbahn verstellbar ist.

Der Messhintergrund auf dem Umfang der Rolle wird vorzugsweise synchron mit der Messeinheit quer zur Materialbahn bewegt, es ist aber auch möglich, die Messeinheit und den gegenüberliegenden Messhintergrund in einer vorgegebenen Position ohne seitliche Bewegung anzuordnen.

Erfindungsgemäß wird der Messhintergrund als auf der Materialbahn abrollender Messhintergrund ausgebildet, der auch in Form eines Bandes ausgebildet sein kann.

Beispielsweise wird die Erfindung anhand der Zeichnung näher erläutert Es zeigen
- Fig. 1: schematisch eine unter einer Materialbahn angeordnete, anstellbare Rolle mit darauf angebrachtem Messhintergrund,
- Fig 2: eine abgewandelte Ausführungsform mit unterschiedlichen Ausführungen eines Messhintergrunds,
- Fig. 3: eine Detailansicht einer Rolle mit Messhintergrund auf dem Umfang, und
- Fig. 4: eine weitere Ausführungsform.

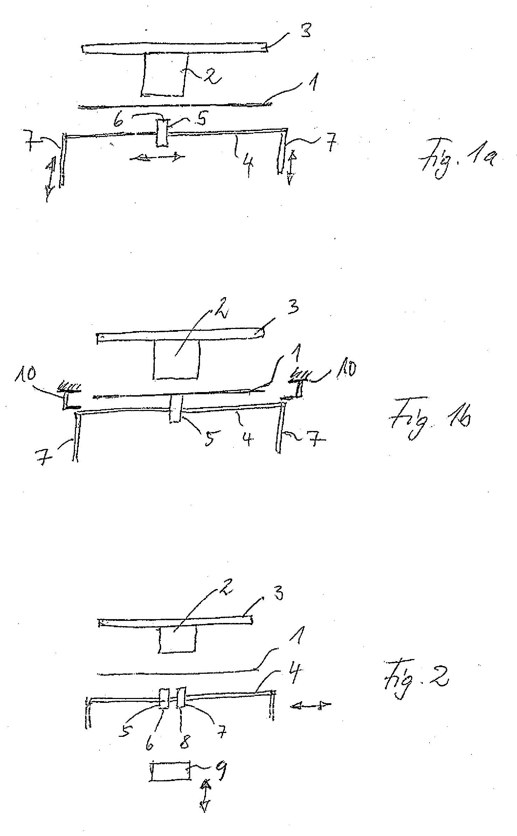

Fig. 1 zeigt schematisch eine quer über eine senkrecht zur Zeichenebene bewegte Materialbahn 1 mit einer über der Materialbahn 1 längs einer Traverse 3 verfahrbaren Farbmesseinheit 2, in der ein Farbmesskopf vorzugsweise in Verbindung mit einer Kamera angeordnet ist, die das gleiche Farbfeld auf dem Druckbild auf der Materialbahn 1 abbildet, das vom Farbmesskopf gemessen wird, um anschließend eine Auswertung des Farbfeldes vornehmen zu können.

Insbesondere wenn die Materialbahn 1 aus einer transparenten oder zumindest teilweise transparenten Folie besteht, ist der Farbmesswert eines Farbfeldes auf der Folie stark von dem vorhandenen Messhintergrund abhängig, der für die Messeinheit 2 durch das Material der Materialbahn 1 hindurch sichtbar ist und dadurch die Farbmessung beeinflusst.

Unter der Materialbahn 1 ist auf einer Achse 4 eine Rolle 5 frei drehbar gelagert, auf deren Umfang ein Messhintergrund 6, beispielsweise ein weißer Messhintergrund, aufgebracht ist. Die Achse 4 der Rolle 5 ist durch einen im Einzelnen nicht dargestellten Mechanismus 7 anhebbar und absenkbar, sodass die Rolle 5 mit ihrem Umfang an der Unterseite der Materialbahn 1 zum Anliegen gebracht werden kann. Fig. 1a zeigt die Rolle 5 mit dem Messhintergrund 6 in der Außerbetriebsstellung in einem Abstand von der Materialbahn und Fig. 1b zeigt die Rolle 5 in der Betriebsstellung anliegend an der Materialbahn 1.

In der Betriebsstellung der Fig. 1b dreht sich die leichtgängig auf der Achse 4 verdrehbare Rolle 5 mit der bewegten Materialbahn 1, sodass die Reibung zwischen Materialbahn 1 und Messhintergrund 6 gering gehalten wird.

Vorzugsweise wird die Rolle 5 mit einem geringen Gewicht, beispielsweise aus Kunststoff ausgebildet, sodass die Rolle 5 wegen ihrer geringen zu beschleunigenden Masse schnell durch die sich bewegende Materialbahn 1 in Drehung versetzt werden kann

Nach Ausführung der Farbmessung wird die Achse 4 durch den Verstellmechanismus 7 wieder abgesenkt, sodass der Umfang der Rolle 5 bzw. der Messhintergrund 6 von der Materialbahn 1 wegbewegt wird.

Vorteilhafterweise wird die Rolle 5 mit der Messeinheit 2 quer zur Materialbahn 1 verfahrbar ausgebildet, damit sich der Messhintergrund 6 immer unter der Messeinheit 2 befindet Hierfür kann die Achse 4 mit der darauf in einer vorbestimmen Position verdrehbar gelagerten Rolle 5 quer zur Materialbahn 1 verfahrbar sein oder es kann die Rolle 5 auf der Achse 4 durch eine nicht dargestellte Einrichtung längs der Achse 4 synchron mit der Messeinheit 2 quer zur Materialbahn 1 bewegt werden.

Fig. 2 zeigt eine Ausführungsform, bei der auf der Achse 4 eine weitere Rolle 7 vorzugsweise in einem axialen Abstand von der Rolle 5 frei drehbar angeordnet ist, auf deren Außenumfang ein anderer Messhintergrund, beispielsweise ein schwarzer Messhintergrund 8, aufgebracht ist Hierdurch ist es möglich, in Abhängigkeit von dem verwendeten Material der Materialbahn 1 einen hellen oder dunklen Messhintergrund 6 oder 8 für die Farbmessung einzusetzen.

Es ist auch möglich, auf einer langgestreckten Walze, die frei drehbar auf der Achse 4 angeordnet ist, in Achsrichtung nebeneinander verschiedene Messhintergrundarten aufzubringen, so dass für den Wechsel eines Messhintergrunds für die Farbmessung die Walze in Achsrichtung verstellt werden kann

Die die Rollen 5 und 7 drehbar tragende Achse 4 kann hierzu parallel zur Materialbahn 1 verstellt werden, wie durch einen Doppelpfeil angedeutet, damit der jeweilige Messhintergrund 6 bzw. 8 in die Messposition unter der Messeinheit 2 gebracht werden kann.

Es können auch mehr als zwei traversierende Walzen bzw. Rollen 5 und 7 mit jeweils einer oder mehreren individuell eingefärbten Farbzonen als Messhintergrund vorgesehen werden, wenn dies für die jeweilige Farbmessung zweckmäßig erscheint.

Es ist auch möglich, die Rollen 5, 7 oder entsprechende Walzen austauschbar auf einer Achse 4 vorzusehen, sodass je nach Bedarf ein unterschiedlich eingefärbter Messhintergrund für die jeweilige Farbmessung vorgesehen werden kann.

Bei einem praktischen Ausführungsbeispiel kann die Rolle 5, 7 einen Durchmesser von etwa 200 mm haben, so dass sich bei Anlage der Rolle an der Materialbahn 1 eine für die Farbmessung ausreichend große Kontaktfläche zwischen Rollenumfang und Materialbahn 1 ergibt. Die Breite des Rollenumfangs kann bspw 1 bis 2 cm betragen

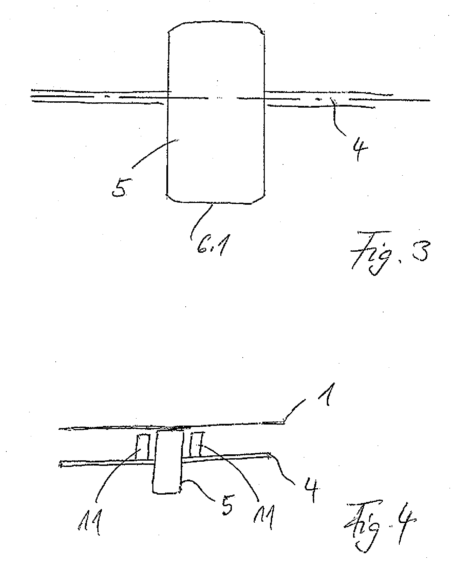

Vorzugsweise weist die Rolle 5 bzw. 7 eine ballige Umfängsfläche auf, wie dies Fig. 3 schematisch zeigt. Vorteilhafterweise wird im Mittelbereich der balligen Umfangsfläche ein etwa 1 cm breiter ebener Anlagebereich 61 vorgesehen, der eine gleichmäßige Anlage des Messhintergrunds 6 an der Materialbahn 1 ergibt

Damit ein definierter Abstand zwischen Messhintergrund 6 bzw. 8 und Messeinheit 2 bei den Messungen eingehalten wird, wird ein Anschlag vorgesehen, der in Fig. 1b schematisch bei 10 angedeutet ist Dieser Anschlag 10 liegt bspw. etwa 2 mm über der Ebene der Materialbahn 1, so dass sich beim Anliegen der Rolle 5 an der Materialbahn 1 ein vorgegebener Anpressdruck der Rolle 5 an der Materialbahn ergibt
Vorteihafterweise wird der Anschlag 10, der zweckmäßigerweise beiderseits der Rolle 5 vorgesehen werden kann, einstellbar ausgebildet, so dass je nach Stärke der Materialbahn 1 der Anschlag 10 auf eine vorbestimmte Position eingestellt werden kann, in der sich der Messhintergrund 6 auf der Rolle 5 in Anlage an der Materialbahn 1 befindet.

Nach einer weiteren Ausgestaltung kann insbesondere in der Außerbetriebsstellung der Fig. 1a, in der sich der Messhintergrund 6 in einem Abstand von der Materialbahn 1 befindet, eine Abstreif- und Reinigungseinrichtung vorgesehen werden, die in Fig. 2 schematisch bei 9 angedeutet ist und in der Außerbetriebsstellung den Messhintergrund 6 und 8 bzw. den Umfang der Rolle 5 und/oder 7 reinigt. Diese Reinigungsvorrichtung kann unabhängig von der Stellung der Achse 4 ebenfalls anhebbar und absenkbar sein, sodass sie nur in bestimmten Zeitabständen an dem Messhintergrund 6 bzw. 8 zum Anliegen kommt, um Verschmutzungen auf dem Messhintergrund zu beseitigen.

Anstelle einer Rolle 5 oder 7 kann auch eine verdrehbare Walze mit einem vorgegebenen Messhintergrund gesehen werden, die sich über den Messbereich erstreckt Bei einer solchen Ausführungsform muss der Messhintergrund nicht mit der Messeinheit 2 quer zur Materialbahn 1 bewegt werden

Nach einer weiteren Abwandlung kann die mit dem Messhintergrund auf dem Umfang versehene Rolle oder Walze nicht frei drehbar auf der Achse 4 angeordnet sein, sondern durch eine Welle 4 mit einer Drehzahl angetrieben werden, die der Laufgeschwindigkeit der Materialbahn 1 entspricht. Beispielsweise kann an einem nicht dargestellten Druckzylinder die Drehzahl gemessen und auf den motorischen Antrieb der Welle 4 so übertragen werden, dass die Rollen 5 und 7 mit einer solchen Drehzahl angetrieben werden, dass der Rollenumfang synchron mit der Materialbahn 1 bewegt wird, also keine Relativbewegung zwischen Messhintergrund und Materialbahn auftritt, um Kratzspuren auf der Materialbahn oder am Messhintergrund zu vermeiden. Vorzugsweise kann die Rolle 5 oder 5,7 auch in der Außerbetriebsstellung angetrieben werden und nicht erst bei Kontaktaufnahme mit der Materialbahn.

Durch eine solche Ausgestaltung mit angetriebener Rolle 5, 7 wird Reibung zwischen Messhintergrund 6, 8 und Materialbahn 1 während der Farbmessung weiter verringert.

Nach einer weiteren Ausgestaltung der Erfindung kann die Materialbahn 1 durch Anlegen von Luftdruck oder Unterdruck zur Anlage an einer stationär angebrachte drehbare Rolle 5 bzw. 7 gebracht werden, ohne dass die Achse 4, auf der die Rolle 5 frei drehbar gelagert ist, relativ zur Materialbahn 1 angehoben oder abgesenkt wird In diesem Falle wird die Rolle 5, wenn die Materialbahn 1 durch Luftdruck oder Unterdruck am Umfang der Rolle 5 zum Anliegen gebracht wird, durch die laufende Materialbahn 1 in Drehung versetzt, wodurch die Reibung und damit der Verschmutzungsgrad des Messhintergrunds relativ zur Materialbahn ebenso verringert wird, wie bei der zuvor beschriebenen Ausführungsform

Fig. 4 zeigt schematisch ein Ausführungsbeispiel, bei dem beiderseits der Rolle 5 in einem geringen Abstand unter der Materialbahn 1 positionierte Luftansaugdüsen 11 vorgesehen sind, die während des Messvorgangs die Materialbahn 1 ansaugen und auf dem Umfang der Rolle 5 zum Anliegen bringen. Dabei liegt der obere Rand der Luftansaugdüsen 11 vorzugsweise auf einem Radius neben der Rolle 5, der kleiner ist als der maximale Radius der Rolle 5 bzw. des Messhintergrunds 6, so dass bei Anliegen der Materialbahn 1 an der Rolle 5 die Materialbahn 1 nicht mit den Düsen 11 in Berührung tritt.

Anstelle der Luftansaugdüsen 11 können auch Düsen über der Materialbahn 1 vorgesehen werden, welche durch Luftdruck die Materialbahn 1 nach unten gegen die Rolle 5 drücken

Der auf dem Umfang einer verdrehbaren Rolle ausgebildete Messhintergrund wird vorzugsweise in Verbindung mit einer quer zur Materialbahn verfahrbaren Messeinheit verwendet, wobei der Messhintergrund synchron mit der Messeinheit quer zur Materialbahn bewegt wird. Es ist aber auch möglich, die Messeinheit und den gegenüberliegenden Messhintergrund stationär relativ zur Materialbahn anzuordnen.

Durch Anlage der Materialbahn 1 auf dem Umfang der Rolle 5, wobei ein gewisser geringer Anpressdruck zwischen Rollenumfang und Materialbahn vorliegt, werden eventuell auftretende Schwingungen der Materialbahn 1 bereits unterdrückt, es ist aber auch möglich, zusätzlich eine Stabilisiereinrichtung vorzusehen, die Schwingungen der Materialbahn 1 im Messbereich oder auch nur während einer Messung unterdrückt.

Es ist auch möglich, den Messhintergrund auf einem Band auszubilden, das bspw. zwischen zwei verdrehbaren Rollen umläuft, um den Anlagebereich des Messhintergrunds an der Materialbahn 1 zu vergrößern. Bei einer solchen Ausgestaltung mit einem Band wird vorzugsweise ein motorischer Antrieb des Bandes vorgesehen, durch den das Band als Messhintergrund synchron mit der laufenden Materialbahn bewegt wird

## Patentansprüche

1. Vorrichtung für die Farbmessung an einem auf einer laufenden Materialbahn aufgedruckten Druckbild, umfassend
eine über der Materialbahn (1) angeordnete, vorzugsweise verfahrbare Farbmesseinheit (2) und einen der Farbmesseinheit (2) gegenüberliegenden, unter der Materialbahn (1) angeordneten Messhintergrund (6), wobei zur Farbmessung kurzzeitig die Materialbahn (1) mit dem Messhintergrund in Kontakt bringbar ist, wobei der Messhintergrund (6) auf dem Umfang einer verdrehbaren Rolle (5) oder einer verdrehbaren Walze ausgebildet ist.

2. Vorrichtung nach Anspruch 1, wobei die verdrehbare Rolle (5) zur Anlage an der Materialbahn (1) anhebbar und zum Abheben von der Materialbahn (1) absenkbar angeordnet ist.

3. Vorrichtung nach Anspruch 1, wobei die Materialbahn (1) durch Anlegen von Luftdruck oder Unterdruck auf dem Umfang der verdrehbaren Rolle (5) zum Anliegen bringbar ist.

4. Vorrichtung nach Anspruch 3, wobei neben der Rolle (5) Luftdruckdüsen und/oder Luftansaugdüsen (11) angeordnet sind, deren oberer Rand unterhalb des Umfangs der Rolle (5) liegt.

5. Vorrichtung nach einem der vorhergehenden Ansprüchen, wobei wenigstens zwei beabstandete Rollen (5, 7) verdrehbar angeordnet sind und auf dem Umfang der einen Rolle (5) ein anderer Messhintergrund (6) ausgebildet ist als auf dem Umfang (8) der anderen Rolle (7).

6. Vorrichtung nach einem der vorhergehenden Ansprüche, wobei eine Reinigungseinrichtung (9) für den Messhintergrund (6 bzw 8) vorgesehen ist.

7. Vorrichtung nach einem der vorhergehenden Ansprüche, wobei die Rolle (5, 7) frei drehbar auf einer Achse (4) angeordnet ist.

8. Vorrichtung nach einem der Ansprüche 1 bis 6, wobei die Rolle (5, 7) auf einer Welle angeordnet ist, die durch eine Antriebseinrichtung in Drehung versetzbar ist.

9. Vorrichtung nach einem der vorhergehenden Ansprüche, wobei die Rolle (5, 7) auf der Achse bzw. Welle austauschbar angeordnet ist.

10. Vorrichtung nach einem der vorhergehenden Ansprüche, wobei die Rolle (5, 7) eine ballige Umfangsfläche (6, 8) aufweist, die vorzugsweise in der Mitte einen ebenen Anlagebereich (6 1) aufweist.

11. Vorrichtung nach Anspruch 2, wobei die Rolle (5, 7) in der Betriebsstellung an einem Anschlag (10) anliegt, der einen vorgegebenen Abstand des Messhintergrunds (6, 8) auf dem Umfang der Rolle von der Messeinheit (2) vorgibt.

12. Vorrichtung nach Anspruch 11, wobei der Anschlag (10) relativ zur Messeinheit (2) einstellbar ist.

13. Vorrichtung nach einem der vorhergehenden Ansprüche, wobei der Messhintergrund (6, 8) auf dem Umfang der Rolle (5, 7) synchron mit der Messeinheit (2) quer zur Materialbahn (1) verfahrbar ist.

14. Verfahren zum Messen eines Farbfeldes eines auf einer laufenden Materialbahn aufgedruckten Druckbildes mittels einer über der laufenden Materialbahn angeordneten Messeinheit, der gegenüberliegend unter der zumindest teilweise transparenten Materialbahn ein Messhintergrund angeordnet ist, wobei die Materialbahn (1) kurzzeitig mit einem Messhintergrund (6, 8) in Kontakt gebracht wird, wobei der Messhintergrund (6) auf der Materialbahn (1) abrollt.

15. Verfahren nach Anspruch 14, wobei der an der Materialbahn (1) abrollende Messhintergrund (6, 8) auf dem Umfang einer Rolle oder eines Bandes ausgebildet wird.

## Claims

1. An apparatus for colour measurement on a printed image printed onto a running material web, the apparatus comprising
a colour measurement unit (1) arranged above the material web (1), the colour measurement unit being preferably displaceable, and a measurement background (6) arranged below the material web (1) and opposite to the colour measurement unit (2), the colour measurement unit being arranged to be brought into temporary contact with the measurement background for the purpose of colour measurement,
wherein the measurement background (6) is formed on the periphery of a rotatable roller (5) or a rotatable drum.

2. The apparatus according to claim 1, wherein the rotatable drum (5) is liftable for being brought into engagement with the material web (1) and lowerable for being withdrawn from the material web (1).

3. The apparatus according to claim 1, wherein the material web is adapted to be brought into engagement with the periphery of the rotatable roller (5) by applying air pressure or vacuum pressure.

4. The apparatus according to claim 3, wherein air pressure nozzles and/or air suction nozzles (11) are arranged next to the roller (5) with their top edge being arranged below the periphery of the roller (5).

5. The apparatus according to any of the preceding claims, wherein at least two interspaced rollers (5, 7) are arranged to be rotatable, and a measurement background (6) formed on the periphery of the one roller (5) is different from a measurement background formed on the periphery (8) of the other roller (7).

6. The apparatus according to any of the preceding claims, wherein a cleaning device (9) is provided for cleaning the measurement background (6 or 8).

7. The apparatus according to any of the preceding claims, wherein the roller (5, 7) is arranged to be free to rotate on an axle (4).

8. The apparatus according to any of the claims 1 to 6, wherein the roller (5, 7) is arranged on a shaft that is adapted to be driven for rotation by a drive system.

9. The apparatus according to any of the preceding claims, wherein the roller (5, 7) is replaceably arranged on the axle and shaft, respectively.

10. The apparatus according to any of the preceding claims, wherein the roller (5, 7) has a crowned peripheral surface (6, 8) which preferably has a flat engagement region (61) in its centre.

11. The apparatus according to claim 2, wherein the roller (5, 7), in an operating condition, engages an abutment (10) which defines a predetermined spacing between the measurement background (6, 8) on the periphery of the roller and the measurement unit (2).

12. The apparatus according to claim 11, wherein the abutment (10) is adjustable relative to the measurement unit (2).

13. The apparatus according to any of the preceding claims, wherein the measurement background (6, 8) on the periphery of the roller (5, 8) is adapted to be moved transversely of the material web (1) in synchronism with the measurement unit (2).

14. A method of measuring a colour field of a printed image printed onto a running material web, by means of a measurement unit that is disposed above the running material web and opposite to which a measurement background is disposed below the at least partly transparent material web, the material web (1) being temporarily brought into contract with the measurement background (6, 8), wherein the measurement background (6) rolls on the material web (1).

15. The method according to claim 14, wherein the measurement background (6, 8) rolling on the material web (1) is formed on the periphery of a roller or belt.

## Revendications

1. Dispositif pour la mesure colorimétrique d'une image imprimée sur une bande de matière continue, comportant :
une unité de mesure colorimétrique (2), de préférence mobile, agencée au-dessus de la bande de matière (1) et un arrière-plan de mesure (6) agencé sous la bande de matière (1) et opposé à l'unité de mesure colorimétrique (2), dans lequel la bande de matière (1) peut être mise temporairement en contact avec l'arrière-plan de mesure pour la mesure colorimétrique,
dans lequel l'arrière-plan de mesure (6) est formé sur le pourtour d'un rouleau rotatif (5) ou d'un cylindre rotatif.

2. Dispositif selon la revendication 1, dans lequel le rouleau rotatif (5) est agencé de manière à pouvoir monter pour venir en contact avec la bande de matière (1) et de manière à pouvoir descendre pour abaisser la bande de matière (1).

3. Dispositif selon la revendication 1, dans lequel la bande de matière (1) peut être amenée à reposer sur le pourtour du rouleau rotatif (5) en appliquant de l'air comprimé ou une dépression.

4. Dispositif selon la revendication 3, dans lequel des buses d'air comprimé et/ou des buses d'aspiration d'air (11) dont le bord supérieur se situe sous le pourtour du rouleau (5), sont agencées à côté du rouleau (5).

5. Dispositif selon l'une des revendications précédentes, dans lequel au moins deux rouleaux espacés (5, 6) sont agencés de façon à pouvoir tourner et un autre arrière-plan de mesure (6) est formé aussi bien sur le pourtour du premier rouleau (5) que sur le pourtour (8) de l'autre rouleau (7).

6. Dispositif selon l'une des revendications précédentes, dans lequel un dispositif de nettoyage (9) est prévu pour l'arrière-plan de mesure (6 ou 8).

7. Dispositif selon l'une des revendications précédentes, dans lequel le rouleau (5, 7) est agencé de manière à pouvoir tourner librement sur un axe (4).

8. Dispositif selon l'une des revendications 1 à 6, dans lequel le rouleau (5, 7) est agencé sur un arbre qui peut être mis en rotation par un dispositif d'entraînement.

9. Dispositif selon l'une des revendications précédentes, dans lequel le rouleau (5, 7) est agencé sur l'axe ou l'arbre de manière interchangeable.

10. Dispositif selon l'une des revendications précédentes, dans lequel le rouleau (5, 7) comporte une surface circonférentielle bombée (6, 8) comportant de préférence une zone de contact plate (6.1) au centre.

11. Dispositif selon la revendication 2, dans lequel, dans la position de fonctionnement, le rouleau (5, 7) est en contact avec une butée (10) qui règle une distance prédéfinie entre l'arrière-plan de mesure (6, 8) et le pourtour du rouleau de l'unité de mesure (2).

12. Dispositif selon la revendication 11, dans lequel la butée (10) peut être réglée par rapport à l'unité de mesure (2).

13. Dispositif selon l'une des revendications précédentes, dans lequel l'arrière-plan de mesure (6, 8) peut être déplacé sur le pourtour du rouleau (5, 7) de manière synchronisée avec l'unité de mesure (2) transversalement à la bande de matière (1).

14. Procédé pour mesurer un champ colorimétrique d'une image imprimée sur une bande de matière continue au moyen d'une unité de mesure agencée au-dessus de la bande de matière continue, un arrière-plan de mesure étant agencé de manière opposée sous la bande de matière au moins partiellement transparente, dans lequel la bande de matière (1) est mise temporairement en contact avec un arrière-plan de mesure (6, 8), l'arrière-plan de mesure (6) roulant sur la bande de matière (1).

15. Procédé selon la revendication 14, dans lequel l'arrière-plan de mesure (6, 8) roulant sur la bande de matière (1) est formé sur le pourtour d'un rouleau ou d'une bande.
